# EUROPÄISCHE PATENTSCHRIFT

(11) **EP 1 245 890 B1**
(45) Veröffentlichungstag und Bekanntmachung des Hinweises auf die Patenterteilung: **07.07.2004**
(21) Anmeldenummer: 02004055.6
(22) Anmeldetag: 23.02.2002
(51) Int. Cl.: F16L 23/22

(54) **Dichtelement und Verbindungsanordnung**
Sealing element and connection assembly
Elément d'étanchéité et ensemble de raccordement

(30) Priorität: 27.03.2001 DE 10115068
(43) Veröffentlichungstag der Anmeldung: 02.10.2002
(73) Patentinhaber: Fr. Jacob Söhne GmbH & Co., 32457 Porta Westfalica (DE)
(72) Erfinder: Höinghaus, Ewald, 32479 Hille (DE)
(74) Vertreter: Dantz, Jan Henning

(56) Entgegenhaltungen:
- DE-A- 3 541 712
- DE-A- 3 901 271
- DE-A- 19 814 982
- GB-A- 923 015
- GB-A- 2 349 677
- US-A- 3 524 662
- US-A- 3 836 183
- US-A- 4 326 737

## Beschreibung

Die vorliegende Erfindung betrifft ein Dichtelement zur Verbindung zweier Bördelrohre, das ringförmig umlaufend ausgebildet ist und an einem Bördel eines Rohres anlegbar ist, wobei das Dichtelement den Bördel zumindest teilweise umgreift und mit einem Dichtungsabschnitt zwischen zwei Bördel zweier benachbarter Rohre einfügbar ist. Ferner betrifft die Erfindung eine entsprechende Verbindungsanordnung mit zwei Bördelrohren.

Es sind Dichtelemente zur Abdichtung zweier benachbarter Bördelrohre bekannt. die im wesentlichen U-förmig ausgebildet sind und einen Bördel eines Rohres umgreifen. Der eine Schenkel des Dichtelementes besitzt dabei lediglich eine Haltefunktion, um das Dichtelement an dem Bördel zu fixieren. Der andere Schenkel dient als Dichtungsabschnitt, der zwischen den Bördeln der Rohre eingeklemmt wird. Der Dichtungsabschnitt umfaßt dabei konvex ausgebildete Verdickungen, die aufgrund der Elastizität des Dichtelementes zusammendrückbar sind. Nachteilig bei den vorbekannten Dichtelementen bzw. entsprechenden Verbindungsanordnungen ist, daß das Dichtelement exakt zur Verbindung zweier Bördelrohre mit vorgegebener Dicke sowie einem in der Form vorbestimmten Spannring angepaßt ist. Sobald sich die Dicke der Bördelrohre und der Bördel ändert, muß ein anderes Dichtelement gewählt werden, da sonst die Montage der Spannring-Verbindung erheblich erschwert oder die Dichtheit der Verbindungsanordnung beeinträchtigt wird. Dies erhöht die Anzahl der vorrätig zu haltenden Dichtelemente und somit die Lagerund Herstellungskosten.

Die DE 35 41 712 zeigt ein Dichtelement, dass zwischen zwei Förderrohren eingefügt ist. Die Förderrohre können in einem Winkel zueinander angeordnet werden und das Dichtelement kann eine solche winklige Anordnung ausgleichen. Hierfür weist das Dichtelement seitlich hervorstehende Dichtlippen auf, die an der Stirnkante der Rohre anliegen. Ferner weist das Dichtelement einen seitlichen Vorsprung auf, der in eine Aufnahme eines Flansches einfügbar ist.

Es ist daher Aufgabe der vorliegenden Erfindung, ein Dichtelement und eine Verbindungsanordnung für den Rohrbau bereitzustellen, wobei das Dichtelement für unterschiedliche Bördelrohre mit abweichender Wandstärke einsetzbar ist.

Diese Aufgabe wird mit einem Dichtelement mit den Merkmalen des Anspruchs 1 und einer Verbindungsanordnung mit den Merkmalen des Anspruchs 7 gelöst.

Wenn an dem zwischen den Bördeln der Rohre angeordneten Dichtungsabschnitt mindestens eine elastische Dichtlippe ausgebildet ist, läßt sich mittels des Dichtelementes ein Toleranzausgleich vornehmen, damit auch Bördelrohre mit unterschiedlicher Wandstärke mit demselben Dichtelement abgedichtet werden können. Die elastische Dichtlippe liegt dabei dauerhaft unter einem gewissen Anpreßdruck an dem Bördel an, so daß die Funktion der Abdichtung gewährleistet wird. Durch die Elastizität kann die Lage der Dichtlippe jedoch je nach Bedarf angepaßt werden.

Gemäß einer bevorzugten Ausführungsform der Erfindung sind an gegenüber liegenden Seiten des Dichtungsabschnittes Dichtlippen ausgebildet. Dies erhöht den Toleranzausgleich, da auf beiden Seiten des Dichtungsabschnittes die Elastizität der Dichtlippen eingesetzt wird.

Zur Gewährleistung der Dichtfunktion können dabei an jeder Seite des Dichtungsabschnittes jeweils zwei oder mehrere Dichtlippen ausgebildet sein.

Der Dichtungsabschnitt weist einen mittleren Steg auf, an dem die Dichtlippen angeformt sind, wobei die Dichtlippen mindestens so lang wie die Dikke der Stege sind. Die Dichtlippen können dabei im wesentlichen horizontal ausgebildet sein, um sowohl nach oben als nach unten umgebogen werden zu können. Es ist auch möglich, die Dichtlippen in einen vorgegebenen Einstellwinkel sich von dem mittleren Steg erstrecken zu lassen, um beispielsweise bei einseitiger Unteroder Überdruckbeanspruchung in dem Bördelrohr eine Dichtfunktion bereitzustellen. Damit die Dichtlippen eine ausreichende Stabilität aufweisen, sind diese vorzugsweise keilförmig nach außen spitz zulaufend ausgebildet und können dabei eine gerundete Spitze aufweisen.

Für eine einfache Montage des ringförmigen Dichtelementes weist dieses einen Haltearm auf, der eine Anlagefläche für die dem Dichtungsabschnitt abgewandte Seite des Bördels und eine Anlagefläche für eine Innenseite eines Spannringes ausbildet. Dadurch kann das Dichtelement den Bördel U-förmig umgreifen und an dem Bördel vorfixiert werden.

Erfindungsgemäß wird auch eine Verbindungsanordnung mit zwei Bördelrohren bereitgestellt, bei dem ein erfindungsgemäß ausgebildetes Dichtelement eingesetzt wird. Vorzugsweise ist der Dichtungsabschnitt etwa genauso lang wie der Bördel der Rohre, so daß der Spalt zwischen den Rohren durch den Dichtungsabschnitt überbrückt wird und an der Rohrinnenfläche ein möglichst glatter Übergang ausgebildet ist.

Die Erfindung wird nachfolgend anhand von zwei Ausführungsbeispielen mit Bezug auf die beigefügten Zeichnungen näher erläutert. Es zeigen:
- Figur 1: eine geschnittene Querschnittsansicht eines Dichtelementes gemäß einem ersten Ausführungsbeispiel der vorliegenden Erfindung;
- Figur 2: eine geschnittene Querschnittsansicht eines zweiten Ausführungsbeispieles eines erfindungsgemäßen Dichtelementes;
- Figuren 3A, 3B, 3C: geschnittene Querschnittsansichten erfindungsgemäßer Verbindungsanordnungen mit einem Dichtelement gemäß der Figur 1;
- Figuren 4A, 4B, 4C: geschnittene Querschnittsansichten von Verbindungsanordnungen gemäß dem Stand der Technik.

Ein Dichtelement 1 umfaßt einen Füllabschnitt 2, einen Haltearm 3 und einen Dichtungsabschnitt 4. Das Dichtelement 1 ist aus einem elastischen Material, beispielsweise Perbunan (NBR), Silikon (Si), Keltan (EPDM), Viton (FKM-FPM) oder einer Mischung dieser Materialien hergestellt. Zwischen dem Haltearm 3 und dem Dichtungsabschnitt 4 ist ein Bördel eines Rohres oder ein entsprechender Flanschabschnitt einfügbar, wobei das ringförmige Dichtelement 1 an dem Bördel bzw. Flansch durch elastische Vorspannung vorfixiert ist.

An dem Dichtungsabschnitt 4 sind elastische Dichtlippen 5 ausgebildet, die nach außen keilförmig spitz zulaufen. Die keilförmigen Flächen schließen dabei einen Winkel von etwa 30-50° ein. Die Dichtlippen 5 sind in ihrem vorderen Bereich abgerundet ausgebildet. Zwischen den Dichtlippen 5 sind Aussparungen 6 gebildet, so daß sich die Dichtlippen 5 bis zur benachbarten Dichtlippe 5 relativ frei bewegen können. Die Dichtlippen 5 sind dabei an einem Steg des Dichtungsabschnittes 4 senkrecht angeformt.

Im stirnseitigen Bereich des Dichtungsabschnittes 4 sind schräg nach unten hervorstehende Anlageelemente 7 ausgebildet, die den inneren Spalt zwischen zwei Bördelrohren abschließen. Die Anlageelemente 7 dienen dabei dazu, daß an dem Übergang zwischen zwei Bördelrohren keine Strömungsverluste durch Hohlräume entstehen, so daß der Übergang möglichst glatt ausgebildet ist.

Um den Dichtungsabschnitt 4 an einem Bördel vorfixieren zu können, ist an dem Haltearm 3 eine glatte Anlagefläche 9 ausgebildet, die an der Rückseite des Bördels anliegt. Auf der gegenüber liegenden Seite verdickt sich der Haltearm 3 und bildet so eine schräge Anlagefläche für einen Spannring aus. Der Spannring ist im Querschnitt im wesentlichen U-förmig ausgebildet und weist einen leichten Knick auf, weshalb der Haltearm 3 einen verdickten Abschnitt 8 aufweist, der an den Spannring anlegbar ist

Das Dichtelement wird vorzugsweise zur Verbindung von Bördelrohren mit einem Spannring eingesetzt, wie er in der deutschen Patentanmeldung 100 24 834 offenbart ist. Hinsichtlich der Ausbildung des Spannringes wird auf diese Druckschrift verwiesen, wobei der Querschnitt des Spannringes von wesentlicher Bedeutung ist.

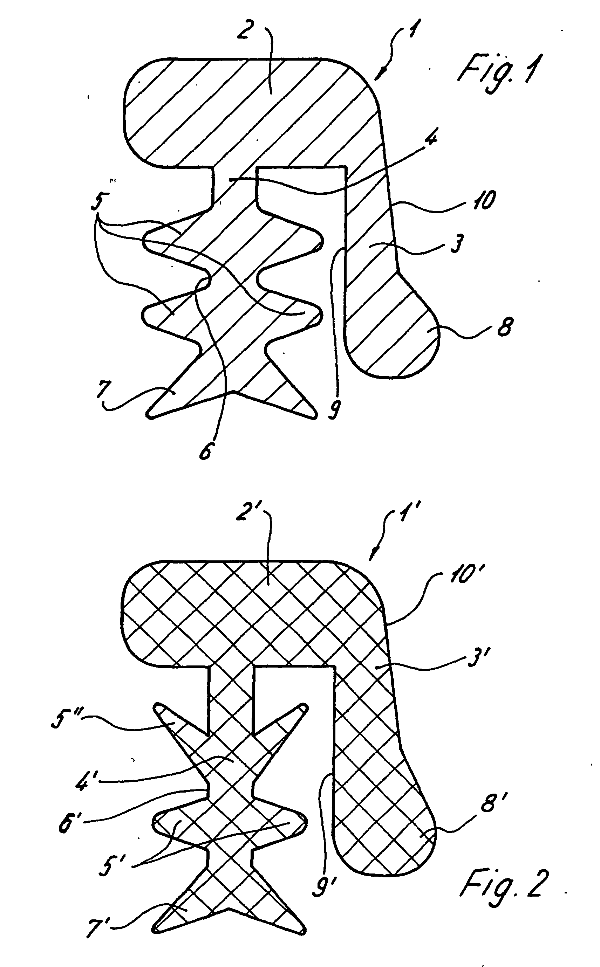

In Figur 2 ist eine modifizierte Ausführungsform eines erfindungsgemäßen Dichtelementes 1' dargestellt. Das Dichtelement 1' weist einen Füllabschnitt 2' sowie einen Haltearm 3' und einen Dichtungsabschnitt 4' auf. An dem Dichtungsabschnitt 4' sind eine senkrecht zu dem Dichtungsabschnitt 4' ausgebildete Dichtlippe 5' und eine schräg angestellte Dichtlippe 5" ausgebildet. Der Haltearm 3' mit den Anlageflächen 9' und 10' sind wie bei dem vorangegangenen Ausführungsbeispiel ausgebildet.

Durch das schräge Anstellen der Dichtlippen 5" läßt sich das Dichtelement 1' besonders gut für Fälle einsetzen, in denen in der Rohrleitung ein dauerhafter Unterdruck besteht. Es ist auch möglich, beide Dichtlippen 5' und 5" schräg anzustellen bzw. die Anstellrichtung zu ändern, beispielsweise die Dichtlippen 5' schräg nach unten an dem Dichtungssteg anzuformen.

Wie in den Figuren 3A-3C gezeigt ist läßt sich das Dichtelement 1 für eine Verbindungsanordnung mit unterschiedlichen Bördelrohren einsetzen.

In Figur 3A ist das Dichtelement 1 zur Verbindung zweier Bördelrohre 11 und 12 eingesetzt, wobei der Dichtungsabschnitt 4 zwischen den Bördeln 13 und 14 eingeklemmt ist. In Figur 3A ist das Dichtelement 1 im unverpreßten Zustand dargestellt, so daß sich überlappende Bereiche ergeben. Beispielsweise sind die Dichtlippen 5 teilweise in den Bördel 13 bzw. 14 hineinstehend eingezeichnet. Durch elastisches Verformen der Dichtlippe 5 liegen diese jedoch an den Bördeln 13, 14 an, wobei die genaue Lage der Dichtlippen 5 aufgrund der Vorfixierung und Einführrichtung variieren kann. Die Dichtlippen 5 liegen jedoch mit einem gewissen Anpreßdruck an den Bördeln 13 und 14 an, um die Dichtigkeit der Verbindung zu gewährleisten.

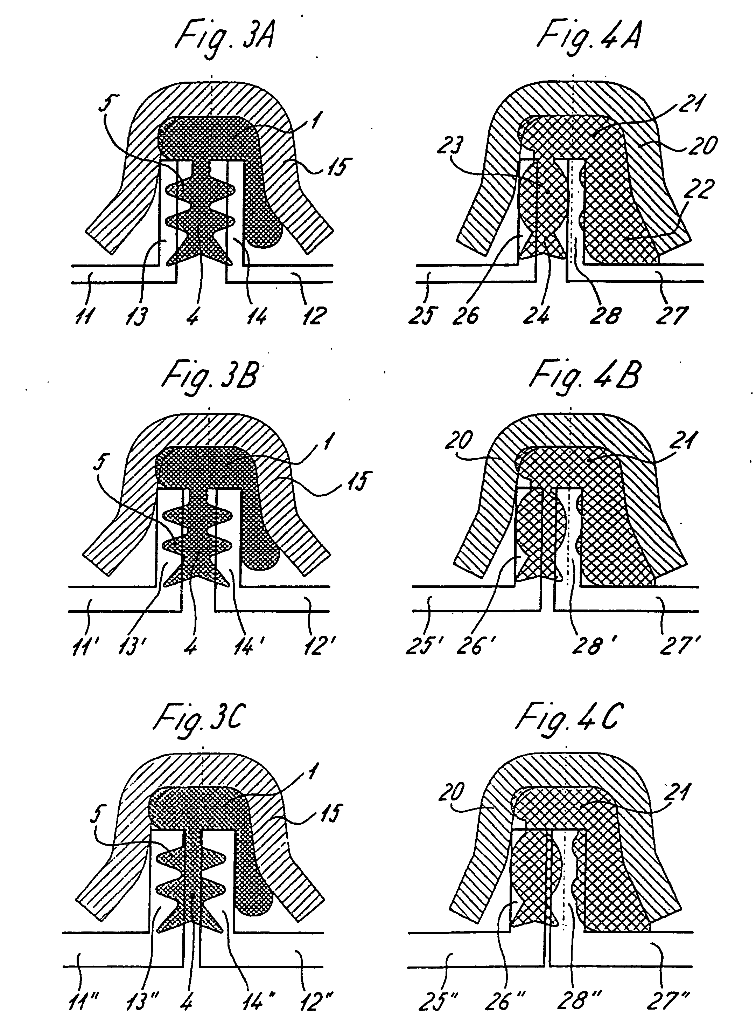

In Fig. 3B ist das Dichtelement 1 bei einer Verbindungsanordnung mit etwas dickeren Bördelrohren 11' und 12' eingesetzt, so daß der Abstand zwischen den Bördeln 13' und 14' etwas geringer ist. Der Dichtungsabschnitt 4 des Dichtelementes 1 wird daher um einen größeren Betrag komprimiert.

In Figur 3C ist ein Ausführungsbeispiel einer Verbindungsanordnung dargestellt, bei dem das Dichtelement 1 mit Bördelrohren 11" und 12" und einem Spannring 15 eingesetzt wird, wobei die Bördelrohre 11" und 12" eine noch dickere Wandstärke aufweisen. Dadurch sind auch die Bördel 13" und 15"dicker ausgebildet, so daß das Dichtelement 1 um einen noch größeren Betrag zu komprimieren ist. Die Dichtlippen 5 liegen dabei vollständig zusammengepreßt an den Bördeln 13" und 14"an und gewährleisten so die Dichtfunktion.

In den Figuren 4A, 4B und 4C sind Verbindungsanordnungen des Standes der Technik dargestellt. Ein Spannring 20 umgreift ein Dichtelement 21 mit seinem Haltearm 22 und einem Dichtungsabschnitt 23. Der Dichtungsabschnitt 23 weist einen Vorsprung 24 auf, der an den Innenflächen des Übergangs zwischen Bördelrohren 25 und 27 glatt anliegt. Der Dichtungsabschnitt 23 ist dabei zwischen Bördeln 26 und 28 der Bördelrohre 25 und 27 eingeklemmt.

Wie in Fig. 4B gezeigt ist, wird beim Einsatz dickerer Bördelrohre 25' und 27' der Abstand zwischen den Bördeln 26' und 28' sehr klein, so daß der Dichtungsabschnitt 24 nur mit der Risiko einer Zerstörung eingefügt oder die Verbindungsanordnung nur mit hohem Kraftaufwand hergestellt werden kann. Daher muß für den Rohrtyp gemäß Figur 4B ein anderes Dichtelement 21 eingesetzt werden.

Bei der in Fig. 4C dargestellten Verbindungsanordnung sind noch dickere Bördelrohre 25" und 27" vorgesehen, zwischen deren Bördel 26" und 28" das in Fig. 4A gezeigte Dichtelement 21 nicht mehr einsetzbar ist. Für die in den Fig. 4A bis 4C gezeigten Verbindungsanordnungen muß daher jeweils ein gesondertes Dichtelement bzw. ein gesonderter Spannring 20 eingesetzt werden.

Bei den erfindungsgemäßen Verbindungsanordnungen sorgen die elastischen Dichtlippen 5, 5' und 5" für einen gewissen Toleranzausgleich, so daß ein Dichtelement für die Verbindung verschiedener Bördelrohre einsetzbar ist. Dies verringert die Anzahl an vorrätig zu haltenden Dichtungen und folglich die Herstellungs- und Lagerkosten, sowie Montagefehler bei Verwendung unterschiedlicher Rohrwandund Dichtelement-Dicken.

## Patentansprüche

1. Dichtelement (1,1') zur Verbindung zweier Bördelrohre (11, 12; 11', 12'; 11", 12"), das ringförmig umlaufend ausgebildet ist und an einem Bördel (13, 14; 13', 14'; 13", 14") eines Rohres anlegbar ist, wobei das Dichtelement (1, 1') den Bördel zumindest teilweise umgreift und mit einem Dichtungsabschnitt (4, 4') zwischen zwei Bördel zweier benachbarter Rohre einfügbar ist, wobei das Dichtelement (1, 1') einen Haltearm (3, 3') aufweist, der eine Anlagefläche (9, 9') für die dem Dichtungsabschnitt (4, 4') abgewandte Seite des Bördels (14, 14', 14") und eine Anlagefläche (10, 10') für eine Innenseite eines Spannringes (15) ausbildet, wobei der Dichtungsabschnitt (4,4') einen mittleren Steg aufweist, an dem elastische Dichtlippen (5, 5', 5") angeformt sind und die Dichtlippen (5, 5', 5") mindestens so lang wie die Dicke des Steges sind und zur Anlage an einen Bördel (14. 14', 14") eines Rohres ausgebildet ist.

2. Dichtelement nach Anspruch 1, **dadurch gekennzeichnet, dass** an gegenüber liegenden Seiten des Dichtungsabschnittes (4,4') Dichtlippen (5, 5', 5") ausgebildet sind.

3. Dichtelement nach Anspruch 2, **dadurch gekennzeichnet, dass** an jeder Seite des Dichtungsabschnittes (4, 4') jeweils zwei Dichtlippen (5, 5', 5") ausgebildet sind.

4. Dichtelement nach einem der Ansprüche 1 bis 3, **dadurch gekennzeichnet, dass** die Dichtlippen (5, 5', 5") keilförmig nach außen spitz zulaufend ausgebildet sind.

5. Dichtelement nach Anspruch 4, **dadurch gekennzeichnet, dass** die Dichtlippen (5, 5', 5") gerundete Spitzen aufweisen.

6. Dichtelement nach einem der Ansprüche 1 bis 5, **dadurch gekennzeichnet, dass** das Dichtelement (1, 1') aus Perbunan (NBR), Silikon (Si), Keltan (EPDM), Viton (FKM-FPM) oder einer Mischung dieser Materialien hergestellt ist.

7. Verbindungsanordnung mit zwei Bördelrohren (11, 12; 11', 12'; 11", 12"), zwischen deren endseitigen Bördeln (13, 14; 13', 14'; 13", 14") ein Dichtungsabschnitt (4, 4') eines Dichtelementes (1, 1') einfügbar ist, und die Rohre mittels eines Spannringes (15) aneinander gehalten sind, **dadurch gekennzeichnet, dass** ein Dichtelement (1, 1') nach einem der vorhergehenden Ansprüche vorgesehen ist.

8. Verbindungsanordnung nach Anspruch 7, **dadurch gekennzeichnet, dass** der Dichtungsabschnitt (4, 4') etwa dieselbe Länge besitzt wie die Bördel (13, 14; 13', 14'; 13", 14") der Rohre (11, 12; 11', 12'; 11", 12").

## Claims

1. Sealing element (1, 1') for the connection of two flanged pipes (11, 12; 11', 12'; 11'', 12''), which is formed such that it runs around in an annular manner and can be placed against a flange (13, 14; 13', 14'; 13'', 14'') of a pipe, the sealing element (1, 1') at least partly embracing the flange and being insertable by a sealing portion (4, 4') between two flanges of two adjacent pipes, the sealing element (1, 1') having a holding arm (3, 3'), which forms an abutting surface (9, 9') for the side of the flange (14, 14', 14'') facing away from the sealing portion (4, 4') and an abutting surface (10, 10') for an inner side of a clamping ring (15), the sealing portion (4, 4') having a central web, on which flexible sealing lips (5, 5', 5'') are formed, and the sealing lips (5, 5', 5'') being at least as long as the thickness of the web and formed for butting against a flange (14, 14', 14") of a pipe.

2. Sealing element according to Claim 1, **characterized in that** sealing lips (5, 5', 5'') are formed on opposite sides of the sealing portion (4, 4').

3. Sealing element according to Claim 2, **characterized in that** two sealing lips (5, 5', 5'') are respectively formed on each side of the sealing portion (4, 4').

4. Sealing element according to one of Claims 1 to 3, **characterized in that** the sealing lips (5, 5', 5'') are formed such that they taper outwards in a wedge-shaped manner.

5. Sealing element according to Claim 4, **characterized in that** the sealing lips (5, 5', 5'') have rounded tips.

6. Sealing element according to one of Claims 1 to 5, **characterized in that** the sealing element (1, 1') is produced from Perbunan (NBR), silicone (Si), Keltan (EPDM), Viton (FKM-FPM) or a mixture of these materials.

7. Connection assembly with two flanged pipes (11, 12; 11', 12'; 11'', 12''), between the end flanges (13, 14; 13', 14'; 13'', 14'') of which a sealing portion (4, 4') of a sealing element (1, 1') can be inserted, and the pipes being held against one another by means of a clamping ring (15), **characterized in that** a sealing element (1, 1') according to one of the preceding claims is provided.

8. Connection assembly according to Claim 7, **characterized in that** the sealing portion (4, 4') has approximately the same length as the flanges (13, 14; 13', 14'; 13'', 14'') of the pipes (11, 12; 11', 12'; 11'', 12'').

## Revendications

1. Élément d'étanchéité (1, 1') pour la liaison de deux tubes à brides (11, 12 ; 11', 12' ; 11", 12"), qui est réalisé périphériquement en forme d'anneau et qui peut être placé sur une bride (13, 14 ; 13', 14' ; 13", 14") d'un tube, l'élément d'étanchéité (1, 1') entourant au moins partiellement la bride et pouvant être inséré par un tronçon d'étanchéité (4, 4') entre deux brides de deux tubes voisins, l'élément d'étanchéité (1, 1') comportant un bras de retenue (3, 3') qui réalise une surface de contact (9, 9') pour le côté de la bride (14, 14', 14") tourné à l'opposé du tronçon d'étanchéité (4, 4'), et une surface de contact (10, 10') pour un côté intérieur d'une bague de serrage (15), le tronçon d'étanchéité (4, 4') présentant une âme centrale sur laquelle sont formées des lèvres d'étanchéité (5, 5', 5") élastiques, et les lèvres d'étanchéité (5, 5', 5") ont au moins une longueur égale à l'épaisseur de l'âme et sont réalisées pour s'appliquer contre une bride (14, 14', 14") d'un tube.

2. Élément d'étanchéité selon la revendication 1, **caractérisé en ce que** des lèvres d'étanchéité (5, 5', 5") sont réalisées sur des côtés opposés du tronçon d'étanchéité (4, 4').

3. Élément d'étanchéité selon la revendication 2, **caractérisé en ce que** sur chaque côté du tronçon d'étanchéité( 4, 4') sont réalisées deux lèvres d'étanchéité (5, 5', 5").

4. Élément d'étanchéité selon l'une des revendications 1 à 3, **caractérisé en ce que** les lèvres d'étanchéité (5, 5', 5") sont réalisées en forme de coin se rétrécissant en pointe vers l'extérieur.

5. Élément d'étanchéité selon la revendication 4, **caractérisé en ce que** les lèvres d'étanchéité (5, 5', 5") présentent des pointes arrondies.

6. Élément d'étanchéité selon l'une des revendications 1 à 5, **caractérisé en ce que** l'élément d'étanchéité (1, 1') est fabriqué en perbunan (NBR), silicone (Si), keltan (EPDM), Viton (FKM-FPM) ou dans un mélange de ces matériaux.

7. Dispositif de liaison comportant deux tubes à brides (11, 12 ; 11', 12' ; 11", 12"), entre les brides (13, 14; 13', 14'; 13", 14") terminales desquels peut être inséré un tronçon d'étanchéité (4, 4') d'un élément d'étanchéité (1, 1'), et les tubes sont maintenus l'un contre l'autre au moyen d'une bague de serrage (15), **caractérisé en ce qu'**il est prévu un élément d'étanchéité (1, 1') selon l'une des revendications précédentes.

8. Dispositif de liaison selon la revendication 7, **caractérisé en ce que** le tronçon d'étanchéité (4, 4') présente à peu près la même longueur que les brides (13, 14; 13', 14'; 13", 14") des tubes (11, 12; 11', 12'; 11", 12").
